# EUROPEAN PATENT SPECIFICATION

(11) **EP 2 685 163 B1**
(45) Date of publication and mention of the grant of the patent: **25.03.2020**
(21) Application number: 13174559.8
(22) Date of filing: 01.07.2013
(51) Int. Cl.: F23R 3/28, F23C 7/00

(54) **Premix burner of the multi-cone type for a gas turbine**
Multikonus-Vormischungsbrenner für eine Gasturbine
Brûleur de prémélange du type multi-cônes destiné à une turbine à gaz

(30) Priority: 10.07.2012 EP 12175639
(43) Date of publication of application: 15.01.2014
(73) Proprietor: Ansaldo Energia Switzerland AG, 5401 Baden (CH)
(72) Inventor: Pasqualotto, Ennio, 8400 Winterthur (CH); Genin, Franklin Marie, 5400 Baden (CH); Hellat, Jaan, 5406 Baden-Ruetihof (CH)
(74) Representative: Bernotti, Andrea

(56) References cited:
- EP-A2- 2 423 597
- DE-A1- 19 545 310

## Description

### BACKGROUND OF THE INVENTION

The present invention relates to the technology of gas turbines. It refers to a premix burner of the multi-cone type for a gas turbine according to the preamble of claim 1.

### PRIOR ART

In the past more than 20 years burners with short but effective premixing zones (so-called EV burners: environmental friendly V-shaped burners) have been implemented in several gas turbines of the applicant, with very low NOx levels. In addition to this, three variants of premix technologies have been successfully developed and deployed into those gas turbine engines: the sequential EV burners - a technology that allows premixing of natural gas and oil into a hot exhaust stream to reheat the exhaust gases of a first high pressure turbine; the MBtu EV burners that are used to burn syngas in a premix flame with low NOx emissions; and the advanced EV burners (AEV) that are capable to prevaporize and premix liquid fuel prior to combustion and burn it with very low NOx emissions without water injection.

Document EP 0 851 172 A2 discloses an exemplary EV burner of the double-cone type, for operating a combustion chamber with a liquid and/or gaseous fuel, whereby the combustion air required for this purpose is directed through tangential air-inlet ducts into an interior space of the burner. This directing of the flow results in a swirl flow in the interior space, which swirl flow induces a backflow zone at the outlet of the burner. In order to stabilize the flame front forming there, at least one zone is provided at each sectional body forming the burner, within which zone inlet openings are provided for the injection of supplementary air into the swirl flow. Due to this injection, a film forms at the inner wall of the sectional bodies, which film prevents the flame from being able to flashback along the inner wall of the sectional bodies into the interior space of the burner.

Document EP 2 423 597 A2 shows another exemplary EV burner in the form of a double-cone burner, which has two partial cone shells which are arranged nested one inside the other, forming air inlet ducts between them, through which combustion air from the outside flows into a conical inner space of the premix burner. Linear rows of holes of injection openings, which extend transversely to the flow direction of the combustion air, are arranged on the outer walls of the air inlet ducts and through which a gaseous fuel is injected into the combustion air which flows past transversely to them.

Document DE 195 45 310 A1 disclose a further pre-mixing burner consisting of a hollow cone with an outer and inner cone casing. At least two inlet ducts run at a tangent to the inner cone casing and are positioned along a straight cone casing line. The part cone axes of the part shells formed lie on the same cone axis. The pre-mixing burner is divided into at least two, for example four, parts containing the inlet ducts so as to swirl the combustion air. A fuel nozzle is positioned at the cone tip for injecting liquid fuel.

The main design parameters for the current EV and AEV burners with a straight cone are the exit diameter, the slot width and the cone angle. These parameters are chosen such, that for a given throughflow capacity and pressure loss the vortex breakdown occurs near to the burner exit. The constraint is that the swirl strength is increasing linearly along the axis until it reaches the critical swirl strength for vortex breakdown near to the burner axis. This means that with these parameters the burner length and burner envelope is preset.

### SUMMARY OF THE INVENTION

It is an object of the present invention to provide a premix burner of the multi-cone type, which avoids the drawbacks of the known premix burners and has a high stability of the central recirculation bubble and therefore reduced axial oscillations of the flame front.

It is another object of the present invention to provide a premix burner, which provides the possibility to achieve a stable combustion without a bluff body such as a long lance.

These and other objects are obtained by a premix burner according to claim 1.

The premix burner according to the invention comprises a plurality of shells, which are arranged around a central burner axis and are parts of a virtual, axially extending common cone, which opens in a downstream direction, whereby said parts are displaced perpendicular to said burner axis such that a tangential slot is defined between each pair of adjacent shells.

It is characterized in that said virtual common cone has a cone angle, which varies in axial direction.

According to an embodiment of the invention the cone angle of the virtual common cone increases in the downstream direction.

Specifically, the variation of the cone angle of the virtual common cone is generated by twisting said common cone around the central burner axis.

More specifically, the surface area of the twisted common cone is generated by rotating a meridian around the central burner axis, one end of which is rotated around the central burner axis relative to the other end by a predetermined twist angle, and that the shells are generated by cutting said virtual common cone along respective meridians.

Especially, the twist angle is equal to or larger than 30°.

Specifically, the twist angle is equal to or larger than 60°.

According to another embodiment of the invention the common cone is subdivided into four equal parts or shells.

According to a further embodiment of the invention each of the shells is equipped with a premix gas channel extending along an axially oriented edge of the respective shell such that a gas can be injected from said premix gas channel through gas injection holes into a stream of air entering the interior of the arrangement of shells through the adjacent slot.

Specifically, said premix gas channels each have a cylindrical shape.

### BRIEF DESCRIPTION OF THE DRAWINGS

The present invention is now to be explained more closely by means of different embodiments and with reference to the attached drawings.
- Fig. 1: shows the basic geometrical elements for generating a virtual cone for a premix burner according to an embodiment of the invention with a twist angle of 60°;
- Fig. 2: shows the bell-shaped virtual cone generated by the elements of Fig. 1;
- Fig. 3: shows the breakdown of the virtual cone of Fig. 2 into four separate shells, which are then, displaced perpendicular to the burner axis;
- Fig. 4: shows the actual combination of the real shells according to Fig. 3 with a respective burner lance;
- Fig. 5: shows the burner configuration of Fig. 4 with premix gas channels arranged at each inter-shell slot; and
- Fig. 6: shows in form of a comparative table the burner configuration for three different twist angles, i.e. 0° (A), 30° (B) and 60° (C).

### DETAILED DESCRIPTION OF DIFFERENT EMBODIMENTS OF THE INVENTION

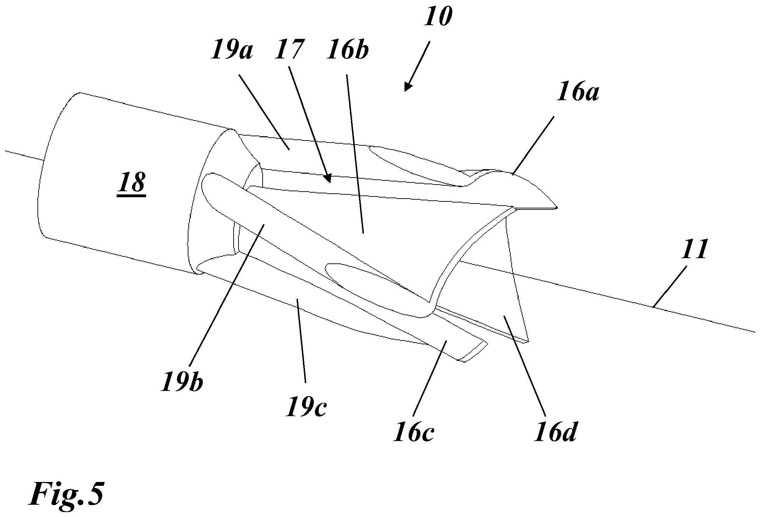

Fig. 5 shows a configuration of a premix burner 10 according to an embodiment of the invention, comprising a swirler arrangement extending along a central burner axis 11, with a burner lance 18, followed in downstream direction by four shells 16a-d, which have a conical shape, are displaced perpendicular to the axis 11 and are arranged in a 90° rotational symmetry with respect to axis 11. Between each pair of adjacent shells a slot 17 is provided, through which air can enter the interior of the shell arrangement. A premix gas channel 19a-c running along a longitudinal edge of each shell ejects a gaseous fuel through a series of holes (not shown) into the air stream entering the slots 17, thereby initiating a premixing of air and fuel.

In order to improve the incidence angle of the air flow due to a highly axially approach flow, the present invention utilizes straight premix gas channels 19a-c, which are not defined in the burner meridian plane, but which are inclined to the burner meridian plane.

By inclining the straight gas channels 19a-d, all surface lines of the EV type burner shells are twisted around, deviating from the original conical shape towards a bell type shape.

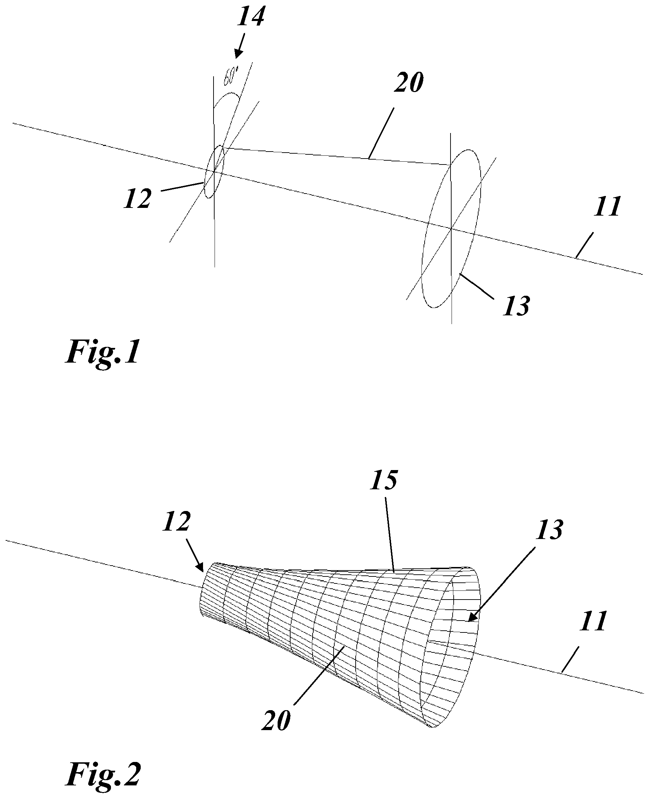

With reference to Fig. 1-4, this twisting may be explained as follows: To generate the shape of the shells 16a-d, one starts with a geometry as shown in Fig. 1, where a burner head 12 (upstream end of the burner) is represented by a first circle having a small diameter and being oriented perpendicular to and coaxial with a burner axis 11. A burner exit 13 (downstream end of the burner) is represented by a second circle having a larger diameter and being oriented perpendicular to and coaxial with a burner axis 11. An exemplary meridian 20 is now twisted with its upstream end around the burner axis 11 by a twist angle 14 relative to the downstream end. The twist angle 14 in this example is 60°.

Now, the twisted meridian 20 is rotated around the burner axis 11 to generate a virtual cone 15, which is twisted and thus bell-shaped (Fig. 2).

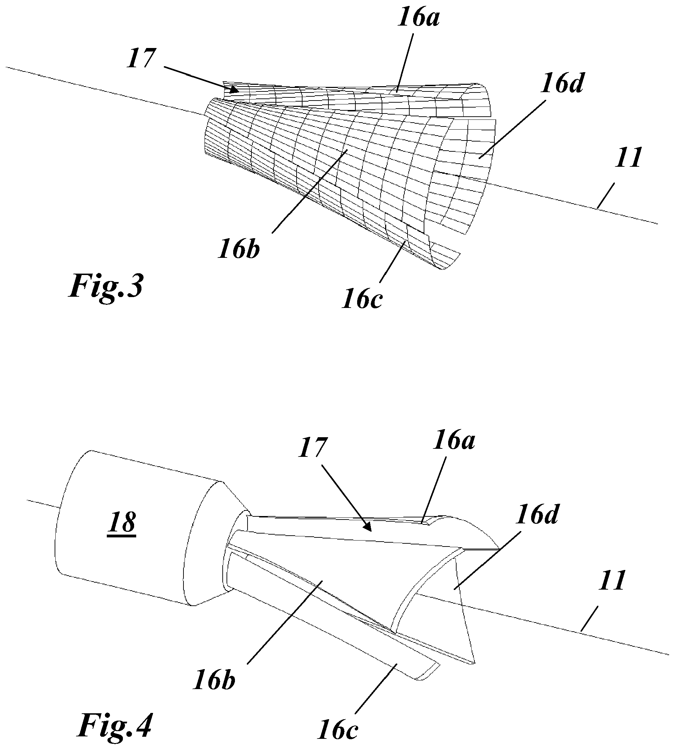

The virtual cone 15 of Fig. 2 is then subdivided into four separate shells 16a-d, which are each displaced perpendicular to the burner axis to open four slots 17 distributed around the burner axis 11 in steps of 90° (Fig. 3).

Fig. 4 shows again the four shells 16a-d, now having a certain thickness and being cut at a certain radius from the axis 11. Also the head of the burner and the last part of the fuel lance 18 are shown in Fig. 4.

Fig. 5 shows the burner swirler consisting of the four shells 16a-d with attached four cylindrical premix gas channels 19a-c. Both, the shells 16a-d and the gas channels 19a-c are cut at a certain radius from the burner axis 11. The gas channels 19a-c are oriented along the inclined meridian lines and contain many gas injection holes along the pipes to achieve a good premixing of the gas and the air entering through the longitudinal slots 17.

The bell shape of the burner shells 16a-d has a smaller cone angle in the upstream part of the burner than on the downstream part of the burner. This is an important innovative feature, since it allows varying the burner swirl number along the burner axis 11: The smaller cone angle leads to a lower swirl number in the upstream burner part, whereas the larger cone angle downstream yields a higher swirl number there.

This has the following consequences:
The main design parameters for the current EV and AEV burners with a straight cone are the exit diameter, the slot width and the cone angle. These parameters are chosen such, that for a given throughflow capacity and pressure loss the vortex breakdown occurs near to the burner exit. The constraint is that the swirl strength is increasing linearly along the axis until it reaches the critical swirl strength for vortex breakdown near to the burner axis. This means that with these parameters the burner length and burner envelope is preset.

Contrasting to this the actual invention has a steadily increasing gradient of the swirl strength along the axis. This means that the critical swirl strength for the vortex breakdown is achieved with a stronger swirl strength gradient, as compared to the EV and AEV burners with a straight cone, which means a better fixation of the axial vortex breakdown position due to a stronger aerodynamic holding force. It is also possible to achieve with this design a shorter burner layout for a given throughflow capacity and pressure loss as compared to the current design with a straight cone.

Furthermore, the possibility to achieve a stable combustion without a bluff body such as a long lance, allows to inject dry oil very upstream at the burner head and therefore to have sufficient time for fuel oil to evaporate along the burner axis until it enters the central recirculation zone where it will be ignited.

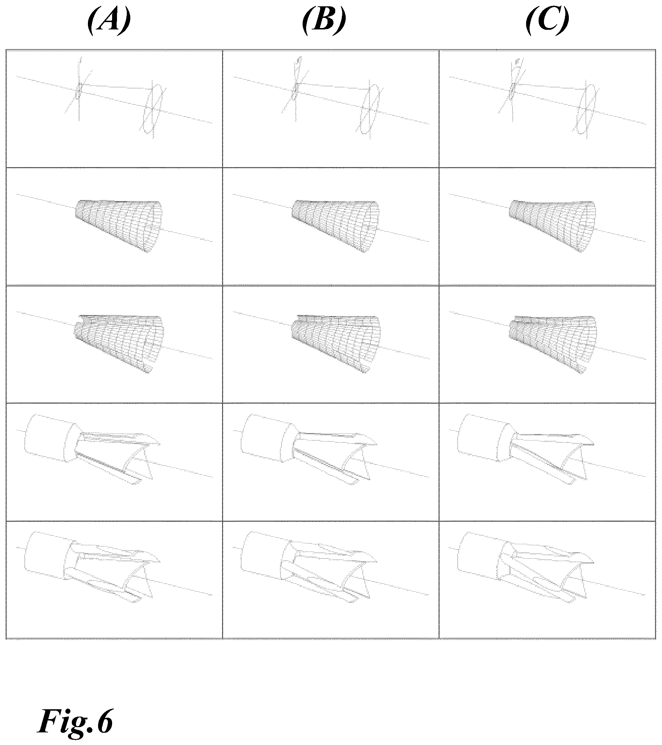

The example of Fig. 1-5 shows a shell configuration with a twist angle of the virtual cone of 60°. However, other twist angles may be used. Fig. 6 shows in form of a comparative table the burner configuration and its derivation for three different twist angles, i.e. 0° (A), 30° (B) and 60° (C). It can be easily seen, that with an increasing twist angle 14 the bell shape of the virtual cone 15 becomes more and more pronounced.

### LIST OF REFERENCE NUMERALS

- 10: premix burner
- 11: axis
- 12: burner head
- 13: burner exit
- 14: twist angle
- 15: virtual cone (twisted, bell shaped)
- 16a-d: shell (part of the virtual cone)
- 17: slot
- 18: burner lance
- 19a-d: premix gas channel
- 20: meridian

## Claims

1. Premix burner (10) of the multi-cone type for a gas turbine, comprising a plurality of shells (16a-d), which are arranged around a central burner axis (11) and are parts of a virtual, axially extending common cone (15), which opens in a downstream direction, whereby said parts are displaced perpendicular to said burner axis (11) such that a tangential slot (17) is defined between each pair of adjacent shells (16a-d), and said virtual common cone (15) has a cone angle, which varies in axial direction, whereby the cone angle of the virtual common cone (15) increases in the downstream direction, **characterized in that** the variation of the cone angle of the virtual common cone (15) is generated by twisting said common cone (15) around the central burner axis (11).

2. Premix burner according to claim 1 **characterized in that** the surface area of the twisted common cone (15) is generated by rotating a meridian (20) around the central burner axis (11), one end of which is rotated around the central burner axis (11) relative to the other end by a predetermined twist angle (14), and that the shells (16a-d) are generated by cutting said virtual common cone (15) along respective meridians (20).

3. Premix burner according to claim 2, **characterized in that** the twist angle (14) is equal to or larger than 30°,

4. Premix burner according to claim 3, **characterized in that** the twist angle (14) is equal to or larger than 60°.

5. Premix burner according to one of the claims 1-4, **characterized in that** the common cone (15) is subdivided into four equal parts or shells (16a-d).

6. Premix burner according to one of the claims 1-5, **characterized in that** each of the shells (16a-d) is equipped with a premix gas channel (19a-d) extending along an axially oriented edge of the respective shell such that a gas can be injected from said premix gas channel (19a-d) through gas injection holes into a stream of air entering the interior of the arrangement of shells (16a-d) through the adjacent slot (17),

7. Premix burner according to claim 6, **characterized in that** said premix gas channels (19a-d) each have a cylindrical shape.

## Patentansprüche

1. Mehrfachkonus-Vormischbrenner (10) für eine Gasturbine, umfassend eine Vielzahl von Schalen (16a-d), die um eine Brennermittelachse (11) herum angeordnet und Teile eines virtuellen, sich axial erstreckenden gemeinsamen Kegels (15) sind, der sich in einer abströmseitigen Richtung öffnet, wobei diese Teile senkrecht zu der Brennerachse (11) angeordnet sind, so dass zwischen jedem Paar benachbarter Schalen (16a-d) ein tangentialer Schlitz (17) begrenzt wird und der virtuelle gemeinsame Kegel (15) einen Kegelwinkel aufweist, der sich in der Axialrichtung verändert, wobei sich der Kegelwinkel des virtuellen gemeinsamen Kegels (15) in der abströmseitigen Richtung vergrößert,
**dadurch gekennzeichnet, dass** die Veränderung des Kegelwinkels des virtuellen gemeinsamen Kegels (15) erzeugt wird, indem der gemeinsame Kegel (15) um die Brennermittelachse (11) verdreht wird.

2. Vormischbrenner nach Anspruch 1,
**dadurch gekennzeichnet, dass** die Oberfläche des verdrehten gemeinsamen Kegels (15) gebildet wird, indem ein Meridian (20) um die Brennermittelachse (11) gedreht wird, dessen eines Ende in Bezug auf das andere Ende in einem vorbestimmten Verdrehwinkel (14) um die Brennermittelachse (11) gedreht wird, und dass die Schalen (16a-d) gebildet werden, indem der virtuelle gemeinsame Kegel (15) entlang der jeweiligen Meridiane (20) geschnitten wird.

3. Vormischbrenner nach Anspruch 2,
**dadurch gekennzeichnet, dass** der Verdrehwinkel (14) gleich oder größer als 30° ist.

4. Vormischbrenner nach Anspruch 3,
**dadurch gekennzeichnet, dass** der Verdrehwinkel (14) gleich oder größer als 60° ist.

5. Vormischbrenner nach einem der Ansprüche 1 - 4,
**dadurch gekennzeichnet, dass** der gemeinsame Kegel (15) in vier gleiche Teile oder Schalen (16a-d) unterteilt wird.

6. Vormischbrenner nach einem der Ansprüche 1 - 5,
**dadurch gekennzeichnet, dass** jede der Schalen (16a-d) mit einem Vormischgaskanal (19a-d) versehen ist, der sich entlang einem axial ausgerichteten Rand der jeweiligen Schale erstreckt, so dass aus dem Vormischgaskanal (19a-d) durch Gaseinspritzöffnungen ein Gas in einen Luftstrom eingespritzt werden kann, der durch den benachbarten Schlitz (17) in das Innere der Anordnung der Schalen (16a-d) strömt.

7. Vormischbrenner nach Anspruch 6,
**dadurch gekennzeichnet, dass** die Vormischgaskanäle (19a-d) jeweils zylinderförmig sind.

## Revendications

1. Brûleur à prémélange (10) du type multi-cônes pour une turbine à gaz, comprenant une pluralité d'enveloppes (16a-d), qui sont agencées autour d'un axe de brûleur central (11) et sont des parties d'un cône commun virtuel, s'étendant axialement (15), qui s'ouvre dans une direction aval, dans lequel lesdites parties sont déplacées perpendiculairement audit axe de brûleur (11) de sorte qu'une fente tangentielle (17) soit définie entre chaque paire d'enveloppes adjacentes (16a-d), et ledit cône commun virtuel (15) a un angle de cône, qui varie dans la direction axiale, dans lequel l'angle de cône du cône commun virtuel (15) augmente dans la direction aval, **caractérisé en ce que** la variation de l'angle de cône du cône commun virtuel (15) est générée par torsion dudit cône commun (15) autour de l'axe de brûleur central (11).

2. Brûleur à prémélange selon la revendication 1, **caractérisé en ce que** la surface du cône commun torsadé (15) est généré par rotation d'un méridien (20) autour de l'axe de brûleur central (11), dont une extrémité est tournée autour de l'axe de brûleur central (11) par rapport à l'autre extrémité d'un angle de torsion prédéterminé (14), et que les enveloppes (16a-d) sont générées par découpe dudit cône commun virtuel (15) le long de méridiens respectifs (20).

3. Brûleur à prémélange selon la revendication 2, **caractérisé en ce que** l'angle de torsion (14) est supérieur ou égal à 30°.

4. Brûleur à prémélange selon la revendication 3, **caractérisé en ce que** l'angle de torsion (14) est supérieur ou égal à 60°.

5. Brûleur à prémélange selon une des revendications 1 à 4, **caractérisé en ce que** le cône commun (15) est subdivisé en quatre parties ou enveloppes égales (16a-d).

6. Brûleur à prémélange selon une des revendications 1 à 5, **caractérisé en ce que** chacune des enveloppes (16a-d) est équipée d'un canal de gaz de prémélange (19a-d) s'étendant le long d'un bord orienté axialement de l'enveloppe respective de sorte qu'un gaz puisse être injecté depuis ledit canal de gaz de prémélange (19a-d) à travers des trous d'injection de gaz dans un flux d'air entrant à l'intérieur de l'agencement d'enveloppes (16ad) à travers les fentes adjacentes (17).

7. Brûleur à prémélange selon la revendication 6, **caractérisé en ce que** lesdits canaux de gaz de prémélange (19a-d) ont chacun une forme cylindrique.
